# EUROPEAN PATENT SPECIFICATION

(11) **EP 4 068 725 B1**
(45) Date of publication and mention of the grant of the patent: **25.09.2024**
(21) Application number: 20901734.2
(22) Date of filing: 30.07.2020
(51) Int. Cl.: H04L 67/1004, G06F 9/50, H04L 67/1008, H04L 67/1023, H04L 41/122, H04L 67/101

(54) **TOPOLOGY-BASED LOAD BALANCING FOR TASK ALLOCATION**
TOPOLOGIEBASIERTER LASTAUSGLEICH ZUR AUFGABENZUWEISUNG
ÉQUILIBRAGE DE CHARGE BASÉ SUR LA TOPOLOGIE POUR L'ATTRIBUTION DE TÂCHES

(30) Priority: 19.12.2019 CN 201911323403
(43) Date of publication of application: 05.10.2022
(73) Proprietor: Huawei Technologies Co., Ltd., Shenzhen, Guangdong 518129, (CN)
(72) Inventor: ZHONG, Guocheng, Shenzhen, Guangdong 518129 (CN); XU, Xinhai, Shenzhen, Guangdong 518129 (CN); CHENG, Baochuan, Shenzhen, Guangdong 518129 (CN); WANG, Yunlong, Shenzhen, Guangdong 518129 (CN)
(74) Representative: Maiwald GmbH
(86) International application number: PCT/CN2020/106021
(87) International publication number: WO 2021/120633

(56) References cited:
- CN-A- 107 819 695
- CN-A- 108 519 911
- CN-A- 109 167 835
- CN-A- 109 960 585
- US-B1- 10 291 707
- QIAN HANGWEI ET AL: "Mega Data Center for Elastic Internet Applications", 2014 IEEE INTERNATIONAL PARALLEL & DISTRIBUTED PROCESSING SYMPOSIUM WORKSHOPS, IEEE, 19 May 2014 (2014-05-19), pages 868 - 874, XP032696327, DOI: 10.1109/IPDPSW.2014.99
- IBRYAM BILGIN ET AL: "Kubernetes Patterns Reusable Elements for Designing Cloud-Native Applications", 4 April 2019 (2019-04-04), XP055819751, Retrieved from the Internet <URL:https://www.redhat.com/cms/managed-files/cm-oreilly-kubernetes-patterns-ebook-f19824-201910-en.pdf> [retrieved on 20210630]

## Description

### TECHNICAL FIELD

This application relates to the field of computer technologies, and in particular, to a load balancing method and a related device.

### BACKGROUND

Load balancing refers to allocating task requests to a plurality of nodes in a load balancing cluster according to a scheduling algorithm, to improve a task processing capability of the load balancing cluster. In a container network scenario, load balancing in a container orchestration and management platform (for example, Kubernetes) is implemented by deploying distributed software on the nodes in the load balancing cluster. The manner of allocating the task requests according to the existing scheduling algorithm by using the distributed software is prone to cause additional network overheads. Therefore, how to reduce network overheads when a task request is allocated is a technical problem being studied by a person skilled in the art.

Document "Mega Data Center for Elastic Internet Applications", QIAN HANGWEI ET AL, 2014 IEEE INTERNATIONAL PARALLEL & DISTRIBUTED PROCESSING SYMPOSIUM WORKSHOPS, IEEE, 2014-05-19, pages 868 - 874, XP032696327 discloses a scalable architecture that supports datacenter-wide resource management for elastic Internet applications in a mega data center. The architecture includes a scalable load-balancing fabric and provides effective knobs to balance load among the applications, servers, access links, as well as the load-balancing components themselves.

Document "Kubernetes Patterns Reusable Elements for Designing Cloud-Native Applications", Ibryam Bilgin ET AL, 2019-04-04 describes a container orchestration platform, Kubernetes.

### SUMMARY

The present invention is defined in the independent claims. The dependent claims define the preferred embodiments.

### BRIEF DESCRIPTION OF DRAWINGS

FIG. 1 is a schematic diagram of an architecture of a load balancing cluster according to an embodiment of this application;
FIG. 2 is a schematic diagram of a process of allocating a task request according to an embodiment of this application;
FIG. 3 is a schematic flowchart of a load balancing method according to an embodiment of this application;
FIG. 4 is a schematic diagram of topology information of each of a plurality of pods in a plurality of nodes according to an embodiment of this application;
FIG. 5 is a schematic diagram of sending topology information of each of a plurality of pods in a plurality of nodes to a first node by a control node according to an embodiment of this application;
FIG. 6 is a schematic diagram of generating topology information of each pod in a node 1 and a node 2 by the node 1 based on LLDP information of the node 1 and the node 2 according to an embodiment of this application;
FIG. 7 is a schematic diagram of a structure of a load balancing apparatus according to an embodiment of this application; and
FIG. 8 is a schematic diagram of a structure of another load balancing apparatus according to an embodiment of this application.

### DESCRIPTION OF EMBODIMENTS

The following describes embodiments of this application with reference to the accompanying drawings in embodiments of this application.

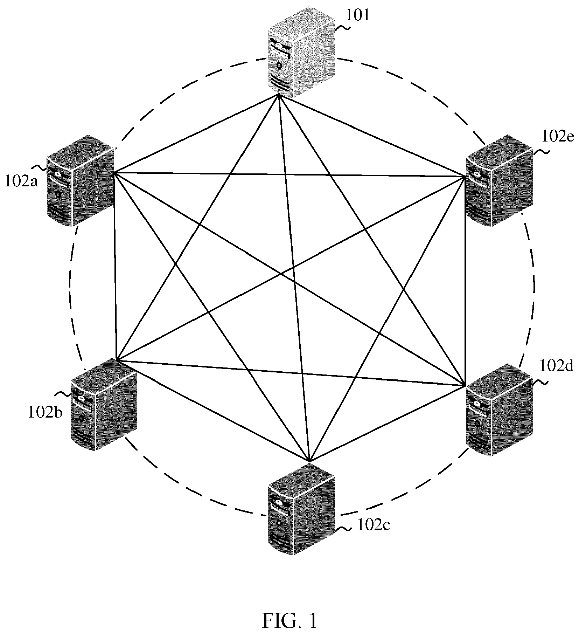

FIG. 1 is a schematic diagram of an architecture of a load balancing cluster according to an embodiment of this application. The load balancing cluster may include one control node 101 and at least two computing nodes 102 (102a to 102e are shown in the figure). Each of the control node 101 and the at least two computing nodes 102 may be one server or one virtual machine on a cloud platform. The control node 101 is configured to manage the at least two computing nodes 102. The at least two computing nodes 102 are load balancing nodes, and are configured to select a pod from the computing nodes to process a to-be-processed task. For example, the to-be-processed task may be a request of opening video software or a request of accessing a website. Each computing node may include one or more smallest management units pods.

The load balancing cluster may be a container orchestration and management platform (for example, Kubernetes, k8s) cluster or a cluster in another running environment. Kubernetes is an open source platform for scheduling containers across host clusters. Kubernetes can enable a containerized application to be deployed simply and efficiently, and provides a mechanism for application deployment, planning, updating, and maintenance. In a conventional application deployment manner, an application is installed by using a plug-in or a script. A disadvantage of this is that running, configuration, management, and a lifecycle of the application are bound to a current operating system. This is not conducive to an operation such as upgrading and updating/rollback of the application. Certainly, some functions may be implemented by creating a virtual machine. However, the virtual machine is quite heavy, and is not conducive to portability. When containers are deployed by using Kubernetes, the containers are isolated from each other, the containers have respective file systems, processes between the containers do not affect each other, and computing resources can be distinguished. Compared with the virtual machine, the container can be quickly deployed. Because the container is decoupled from an underlying facility and a machine file system, the container can be migrated between operating systems of different clouds and versions.

A pod is a smallest management unit in a Kubernetes cluster, is a smallest component created or deployed by a user, and is also a resource object used when a containerized application runs on the Kubernetes cluster. A unique IP address is assigned to each pod, each pod includes one or more containers, and containers in a same pod are allocated to a same node. Containers inside the pod share network space of the pod, including an IP address and a port. The containers inside the pod can communicate with each other by using a host machine of the pod. When the container inside the pod communicates with the outside, a network resource allocated to the pod needs to be used.

The containers inside the pod can access a shared volume. The volume may also be used to persist a storage resource in the pod to prevent file loss after the container is restarted. The containers inside the pod are always scheduled at the same time and have a common running environment.

When a client requests a service, a server selects a target pod in the load balancing cluster by using a load balancing scheduling algorithm, and the target pod serves the client. The load balancing scheduling algorithm includes a static scheduling algorithm and a dynamic scheduling algorithm. The following briefly describes the static scheduling algorithm and the dynamic scheduling algorithm.

Static scheduling algorithm: A service request is allocated according to a specified algorithm regardless of a quantity of real-time connections.

For example, a round robin (RR) algorithm is used to sequentially allocate external requests to nodes in the cluster in turn. In the algorithm, the nodes are equally treated regardless of actual quantities of connections and load on the nodes.

For another example, a weighted round robin (WRR) algorithm is used to allocate one weight to each node in the cluster. A larger weight indicates a larger quantity of allocated requests.

For another example, a destination hashing (DH) algorithm is used to find a corresponding node from a statically allocated hash table by using a destination IP address of a request as a hash key. If the node is available and is not overloaded, the request is sent to the node; otherwise, null is returned. Requests from a same IP address are redirected to a same node to ensure that a destination address remains unchanged.

For another example, a source hashing (SH) algorithm is used to find a corresponding node from a statically allocated hash table by using a source IP address of a request as a hash key. If the node is available and is not overloaded, the request is sent to the node; otherwise, null is returned.

Dynamic scheduling algorithm: A manner of next scheduling is re-determined by checking an activity status of a current quantity of connections on a node.

For example, a least connection (LC) algorithm is used, in other words, a next connection request is directed to a node with a small quantity of connections. The algorithm is implemented as follows: Quantity of connections=Quantity of active connections*256+Quantity of inactive connections.

For another example, a weighted least connection (WLC) algorithm is used, in other words, one weight is allocated to each node based on least connections. The algorithm is implemented as follows: Quantity of connections=(Quantity of active connections*256+Quantity of inactive connections)÷Weight. The algorithm is a relatively ideal algorithm.

For another example, a shortest expected delay (SED) algorithm is used, in other words, a quantity of inactive connections is no longer considered. The algorithm is implemented as follows: Quantity of connections=(Quantity of active connections+1)*256÷Weight.

For another example, a never queue (NQ) algorithm is used. The never queue algorithm is an improvement of the SED algorithm. When a new request arrives, allocation of the new request depends not only on a value obtained by the SED algorithm, but also on whether an active connection exists on a node.

For another example, a locality-based least connection (locality-based least-connection, LBLC) algorithm is used, in other words, a quantity of active connections on a node is further considered based on the DH algorithm.

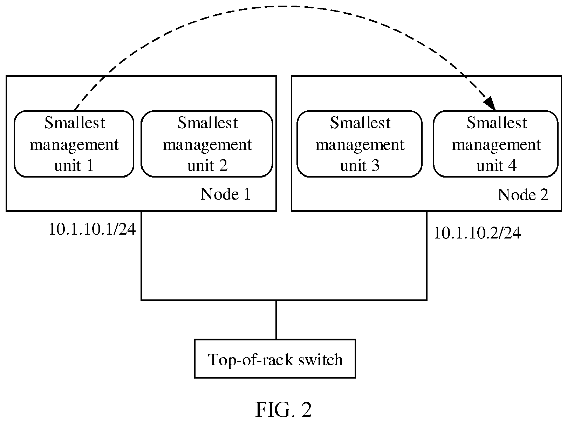

In a container network scenario, load balancing in a container orchestration and management platform is implemented by deploying distributed software on nodes in a load balancing cluster. The manner of allocating a task request according to a scheduling algorithm by using the distributed software is prone to cause additional network overheads. FIG. 2 is a schematic diagram of a process of allocating a task request. A smallest management unit pod 1 in a node 1 is a client that initiates a request. The node 1 and a node 2 are connected to a same top-of-rack switch. The node 1 allocates the task request to a pod 4 in the node 2, and the pod 4 actually provides a service. The task request is not allocated to a pod 2 in the node 1, causing additional network overheads. To resolve the foregoing technical problems, embodiments of this application provide the following solutions.

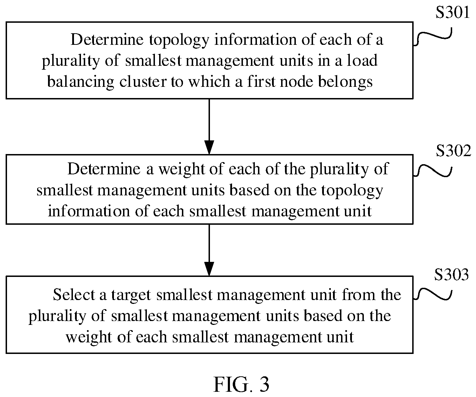

FIG. 3 shows a load balancing method according to an embodiment of this application. The method may be implemented based on the load balancing cluster shown in FIG. 1. The method includes but is not limited to the following steps.

Step S301: A first node determines topology information of each of a plurality of smallest management units pods in a load balancing cluster to which the first node belongs.

The first node is a node, for example, a computing node, in the load balancing cluster. The plurality of pods are distributed on at least two nodes in the load balancing cluster. For example, some are distributed on the first node, some are distributed on a node connected to a same top-of-rack switch as the first node, some are distributed on a node connected to a same leaf switch as the first node, and some are distributed on a node connected to a same spine switch as the first node. A quantity of pods distributed on each of the at least two nodes is not limited herein. The plurality of pods can process a currently to-be-processed task in the first node. The topology information of each pod represents a node in which the pod is located and a connection relationship between the node in which the pod is located and another node.

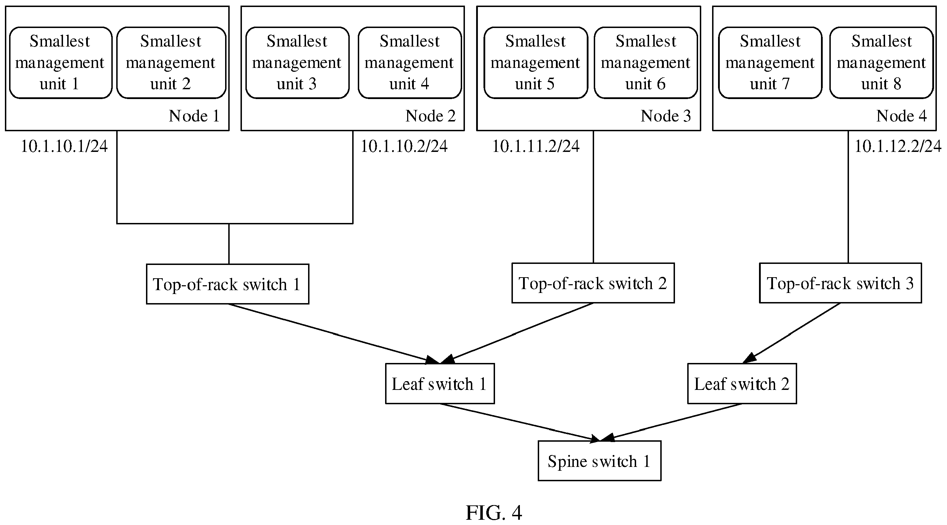

It is assumed that a node 1 includes a pod 1 and a pod 2, a node 2 includes a pod 3 and a pod 4, a node 3 includes a pod 5 and a pod 6, a node 4 includes a pod 7 and a pod 8, the node 1 is the first node, the pod 1 in the node 1 is a client that initiates a request, both the pod 3 and the pod 4 in the node 2 can provide services for the request, both the pod 5 and the pod 6 in the node 3 can provide services for the request, and both the pod 7 and the pod 8 in the node 4 can also provide services for the request. In this case, the node 1 determines, based on an Internet Protocol IP address 10.1.10.2 of the node 2, that the node 2 and the node 1 belong to a same network segment and are connected to a same top-of-rack switch. The node 1 determines, based on an IP address 10.1.11.2 of the node 3, that the node 3 is connected to a top-of-rack switch 2, the node 1 is connected to a top-of-rack switch 1, and the top-of-rack switch 1 and the top-of-rack switch 2 are connected to a same leaf switch 1. The node 1 determines, based on an IP address 10.1.12.2 of the node 4, that the node 4 is connected to a top-of-rack switch 3, the top-of-rack switch 3 is connected to a leaf switch 2, the node 1 is connected to the top-of-rack switch 1, the top-of-rack switch 1 is connected to the leaf switch 1, and the leaf switch 1 and the leaf switch 2 are connected to a same spine switch 1. Topology information of each of the plurality of nodes that is finally determined by the node 1 may be shown in FIG. 4.

Manners of determining the topology information of each of the plurality of pods in the load balancing cluster include but are not limited to the following two manners:

Manner 1: The topology information of each of the plurality of pods that is sent by a control node is received.

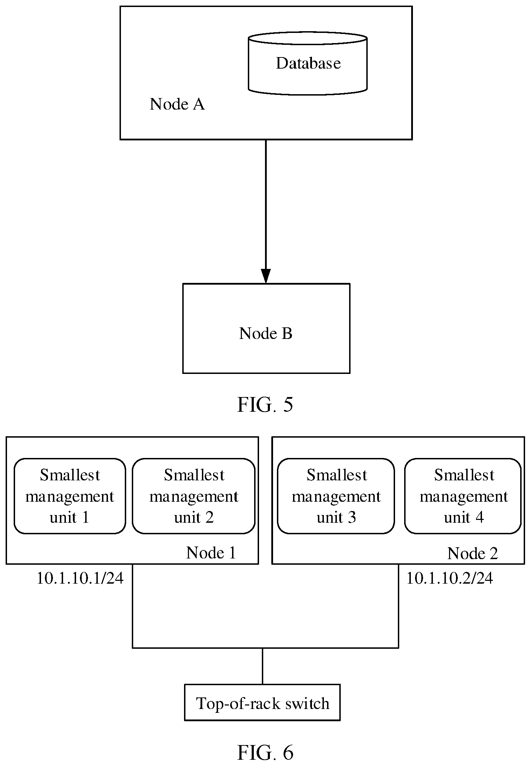

For example, FIG. 5 shows a process in which the control node sends the topology information of each of the plurality of pods in the plurality of nodes to the first node. A node A is the control node, and a node B is the first node. When the load balancing cluster is deployed, a default distributed key value database (etcd) stores a deployment status of each computing node and a deployment status of a pod in each computing node. Optionally, a user may define how each node in the load balancing cluster and a pod in the node are deployed. Optionally, when a new pod is added, an existing pod is deleted, or corresponding information of a pod is updated, related information is updated to the control node in real time. The control node sends the topology information of each of the plurality of pods in the plurality of nodes to the first node, and correspondingly, the first node receives the topology information of each of the plurality of pods.

Manner 2: Link Layer Discovery Protocol (LLDP) information of the at least two nodes is collected, and then the topology information of each of the plurality of pods is generated based on the LLDP information of the at least two nodes.

The collection herein may be active reading or passive reception. In a first case, when the collection is active reading, the first node sends a request message to the plurality of nodes separately or in a multicast manner to request LLDP information. After receiving the request message, each of the plurality of nodes sends LLDP information of the node to the first node. In a second case, when the collection is passive reception, each of the plurality of nodes periodically sends LLDP information of the node to the first node, and correspondingly, the first node receives the LLDP information sent by the plurality of nodes.

The LLDP information may include information used to identify the node and information used to identify a peer end of the node. For example, the information used to identify the node includes a node identifier (namely, a chassis ID) and a port identifier (port ID) of the node, and the information used to identify the peer end of the node includes a chassis ID and a port ID of the peer end. A connection relationship between the node and another node may be determined based on the chassis ID and the port ID that are used for the node and the chassis ID and the port ID of the peer end of the node.

For example, there is a node 1 and a node 2 (each node uses a MAC address of the node as a node identifier and a port name of the node as a port identifier), the node 1 is the first node, a node identifier of the node 1 is chassis ID=00-16-EA-AE-3C-40, a port identifier of a port a of the node 1 is port ID=Ethernet 0/0/1/0, a node identifier of the node 2 is chassis ID=00-16-EA-AE-2B-66, and a port identifier of a port b of the node 2 is port ID=Ethernet 0/0/6/0. In this case, information about the node 1 in collected LLDP information of the node 1 includes chassis ID=00-16-EA-AE-3C-40 and port ID=Ethernet 0/0/7/0, and information about a peer end includes chassis ID=00-16-EA-AE-2B-66 and port ID=Ethernet 0/0/6/0. Information about the node 2 in collected LLDP information of the node 2 includes chassis ID=00-16-EA-AE-2B-66 and port ID=Ethernet 0/0/6/0, and information about a peer end includes chassis ID=00-16-EA-AE-3C-40 and port ID=Ethernet 0/0/7/0. It is determined, based on the LLDP information of the node 1 and the LLDP information of the node 2, that a connection relationship exists between the port a of the node 1 and the port b of the node 2, in other words, it is determined that the node 1 and the node 2 are connected to a same top-of-rack switch. Because the node 1 includes a pod 2, the node 2 includes a pod 3 and a pod 4, and the like, topology information of each pod in the node 1 and the node 2 that is finally generated by the node 1 based on the LLDP information of the node 1 and the node 2 may be shown in FIG. 6.

Step S302: The first node determines a weight of each of the plurality of pods based on the topology information of each pod.

Optionally, the weight of each pod may be configured according to the following rule:

A weight of a pod in the first node is a first weight;
a weight of a pod in a second node is a second weight, where the second node and the first node are connected to a same top-of-rack switch, and an Internet Protocol IP address of the second node and an IP address of the first node belong to a same network segment;
a weight of a pod in a third node is a third weight, where the third node and the first node are connected to different top-of-rack switches, and the different top-of-rack switches are connected to a same leaf switch; and
a weight of a pod in a fourth node is a fourth weight, where the fourth node and the first node are connected to different leaf switches, and the different leaf switches are connected to a same spine switch.

In an implementation, first weight<second weight<third weight<fourth weight. In this implementation, a larger weight indicates higher calculated overheads and a smaller probability of selecting a pod related to the overheads.

In another implementation, first weight>second weight>third weight>fourth weight. In this implementation, a larger weight indicates lower calculated overheads and a larger probability of selecting a pod related to the overheads.

The top-of-rack switch is usually a switch directly connected to a node. The leaf switch connects different top-of-rack switches, is a convergence point of a plurality of top-of-rack switches, and can process all communication coming from the top-of-rack switches and provide the communication to the spine switch. The spine switch connects different leaf switches, and can forward communication at a high speed.

For example, as shown in FIG. 4, if a node 1 is the first node, because both a pod 2 and a pod 1 are located in the node 1, it may be determined that a weight of the pod 2 is a first weight. The first weight may be 4. Because a node 2 and the node 1 are connected to a same top-of-rack switch 1, and IP addresses of the node 2 and the node 1 belong to a same network segment, it may be determined that a weight of each of a pod 3 and a pod 4 in the node 2 is a second weight. For example, the second weight may be 5. Because a node 3 is connected to a top-of-rack switch 2, the node 1 is connected to the top-of-rack switch 1, and the top-of-rack switch 1 and the top-of-rack switch 2 are connected to a same leaf switch 1, it may be determined that a weight of each of a pod 5 and a pod 6 in the node 3 is a third weight. For example, the third weight may be 6. Because a node 4 is connected to a top-of-rack switch 3, the node 1 is connected to the top-of-rack switch 1, the top-of-rack switch 3 is connected to a leaf switch 2, the top-of-rack switch 1 is connected to the leaf switch 1, and the leaf switch 1 and the leaf switch 2 are connected to a same spine switch 1, it may be determined that a weight of each of a pod 7 and a pod 8 in the node 4 is a fourth weight. For example, the fourth weight may be 7.

Step S303: The first node selects a target pod from the plurality of pods based on the weight of each pod.

Specifically, the first node selects a pod with a smallest weight from the plurality of pods as the target pod based on a value of the weight of each pod. The target pod is one of the plurality of pods, and the target pod is configured to process the currently to-be-processed task in the first node. Optionally, when there are a plurality of pods with a smallest weight, further selection may be performed on the plurality of pods with the smallest weight, so that one of the plurality of pods is selected as the target pod.

For example, still as shown in FIG. 4, if the weight of the pod 2 in the node 1 (namely, the first node) is 4, the weight of each of the pod 3 and the pod 4 in the node 2 is 5, the weight of each of the pod 5 and the pod 6 in the node 3 is 6, and the weight of each of the pod 7 and the pod 8 in the node 4 is 7, because 4<5<6<7, the first node selects the pod 2 to process the currently to-be-processed task. For example, the pod 2 responds to a request of opening video software, to provide a corresponding service.

In an optional solution, the selecting a target pod from the plurality of pods based on the weight of each pod may be: when all of the plurality of pods have same load, selecting a pod with a smallest weight from the plurality of pods as the target pod. The load of the pod represents usage of one or more resources, for example, a central processing unit CPU, memory, and bandwidth, of a node in which the pod is located.

For example, the load is CPU usage. If CPU usage of the node 1 in which the pod 2 is located is 50%, CPU usage of the node 2 in which the pod 3 and the pod 4 are located is 50%, CPU usage of the node 3 in which the pod 5 and the pod 6 are located is 50%, CPU usage of the node 4 in which the pod 7 and the pod 8 are located is 50%, the weight of the pod 2 is 4, the weight of each of the pod 3 and the pod 4 is 5, the weight of each of the pod 5 and the pod 6 is 6, and the weight of each of the pod 7 and the pod 8 is 7, because 4<5<6<7, the first node selects the pod 2 with the smallest weight from the plurality of pods as the target pod.

In an optional solution, the selecting a target pod from the plurality of pods based on the weight of each pod may be: when the plurality of pods have different load, selecting the target pod based on load of each of the plurality of pods and the weight of each pod.

Optionally, training may be performed in advance based on a plurality of data records (where each data record includes one load value, one weight, and one pod), to obtain a recommendation model that can represent a correspondence between both load and a weight and a target pod, and then the load and the weight of each pod that are obtained in real time in this embodiment of this application may be input into the recommendation model, to recommend a target pod by using the recommendation model. The recommended target pod is the target pod selected in this application.

Optionally, a corresponding policy may be further preconfigured. A pod is finally selected as the target pod by comprehensively considering impact of load and a weight based on the policy.

Optionally, a corresponding algorithm may also be preconfigured. The load and the weight of each pod are substituted into the algorithm, to output a value representing a selection tendency of each pod, and then a pod is selected as the target pod based on the value representing the selection tendency of each pod. It is assumed that when CPU usage of a node is 10%, an impact factor of a pod in the node is 1; when CPU usage of a node is 20%, an impact factor of a pod in the node is 2; when CPU usage of a node is 30%, an impact factor of a pod in the node is 3; and when CPU usage of a node is 40%, an impact factor of a pod in the node is 4. If CPU usage of the node 1 in which the pod 2 is located is 10%, in other words, an impact factor of the pod 2 is 1, CPU usage of the node 2 in which the pod 3 and the pod 4 are located is 20%, in other words, an impact factor of each of the pod 3 and the pod 4 is 2, CPU usage of the node 3 in which the pod 5 and the pod 6 are located is 30%, in other words, an impact factor of each of the pod 5 and the pod 6 is 3, and CPU usage of the node 4 in which the pod 7 and the pod 8 are located is 40%, in other words, an impact factor of each of the pod 7 and the pod 8 is 4, because the weight of the pod 2 is 4, the weight of each of the pod 3 and the pod 4 is 5, the weight of each of the pod 5 and the pod 6 is 6, and the weight of each of the pod 7 and the pod 8 is 7, the first node selects, as the target pod, a pod for which a sum of a weight and an impact factor is the smallest. A sum of the impact factor and the weight of the pod 2 is 5, a sum of the impact factor and the weight of the pod 3 is 7 (the same is true for the pod 4), a sum of the impact factor and the weight of the pod 5 is 9 (the same is true for the pod 6), and a sum of the impact factor and the weight of the pod 7 is 11 (the same is true for the pod 8). Optionally, there is a stronger tendency to select a pod for which a sum of an impact factor and a weight is smaller. Because 5<7<9<11, the first node selects the pod 2 as the target pod. If sums of impact factors and weights of the pods are the same, the first node selects a pod with a relatively small weight as the target pod.

Only the CPU usage of the node in which the pod is located is used as the load of the pod above. When usage of a plurality of resources of the node in which the pod is located is used as the load of the pod, a person skilled in the art can design a plurality of different algorithms to determine comprehensive usage of the plurality of resources of the node, and use the comprehensive usage as the load of the pod.

In an optional solution, before the topology information of each of the plurality of smallest management units pods in the load balancing cluster to which the first node belongs is determined, a request of a task that needs to be processed in the first node may be directed to the plurality of pods in the load balancing cluster by using a round robin algorithm.

For example, if the request of the task that needs to be processed in the first node may be opening video software, and the plurality of pods in the load balancing cluster can provide services for the request of opening the video software, the first node directs the request of opening the video software to a pod in the load balancing cluster based on the round robin algorithm, and the pod responds to the request directed to the pod, to provide a corresponding service.

Optionally, after selecting the target pod from the plurality of pods based on the weight of each pod, the first node may direct the currently to-be-processed task in the first node to the target pod, to indicate the target pod to execute the currently to-be-processed task. For example, the to-be-processed task may be a request of opening video software or a request of accessing a website.

In the method described in FIG. 3, the weight of each pod is determined based on the topology information of each pod, so that a location relationship of each pod is quantized. Therefore, a value of the weight can reflect a quantity of layers of switches between a node in which each pod is located and the first node. Then a target pod spaced from the first node by a small quantity of layers of switches may be selected based on a value of the weight of each pod, to process the currently to-be-processed task in the first node, so that a pod spaced from the first node by a large quantity of layers of switches is prevented from being selected to process the currently to-be-processed task in the first node, thereby reducing network overheads.

The methods in embodiments of this application are described in detail above. Apparatuses in embodiments of this application are provided below.

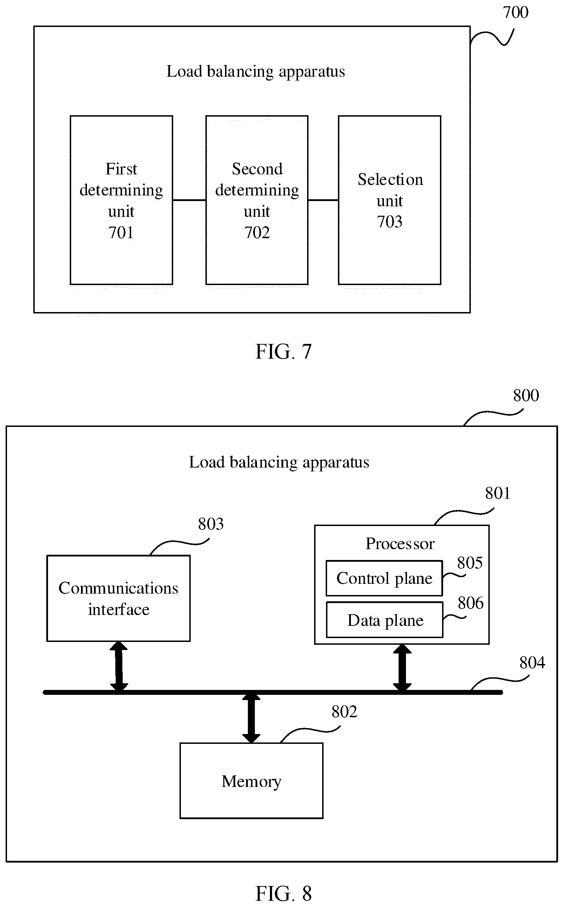

FIG. 7 is a schematic diagram of a structure of a load balancing apparatus according to an embodiment of this application. The load balancing apparatus may be the foregoing first node or a component in the first node. The load balancing apparatus 700 may include a first determining unit 701, a second determining unit 702, and a selection unit 703.

The first determining unit 701 is configured to determine topology information of each of a plurality of smallest management units pods in a load balancing cluster to which the first node belongs. The plurality of pods are distributed on at least two nodes.

The second determining unit 702 is configured to determine a weight of each of the plurality of pods based on the topology information of each pod.

The selection unit 703 is configured to select a target pod from the plurality of pods based on the weight of each pod. The target pod is configured to process a currently to-be-processed task in the first node.

In the foregoing apparatus, the weight of each pod is determined based on the topology information of each pod, so that a location relationship of each pod is quantized. Therefore, a value of the weight can reflect a quantity of layers of switches between a node in which each pod is located and the first node. Then a target pod spaced from the first node by a small quantity of layers of switches may be selected based on a value of the weight of each pod, to process the currently to-be-processed task in the first node, so that a pod spaced from the first node by a large quantity of layers of switches is prevented from being selected to process the currently to-be-processed task in the first node, thereby reducing network overheads.

In an optional solution, the load balancing cluster includes a control node and at least two computing nodes, the first node is one of the at least two computing nodes, the control node is configured to manage the at least two computing nodes, and the plurality of pods are distributed on the at least two computing nodes.

In another optional solution, the first determining unit 701 is configured to receive the topology information of each of the plurality of pods that is sent by the control node.

In the foregoing apparatus, the first node directly receives the topology information of each of the plurality of pods that is sent by the control node, without collecting LLDP information of another computing node. This is quicker and reduces time for selecting the target pod.

In another optional solution, the first determining unit 701 is configured to: collect Link Layer Discovery Protocol LLDP information of the at least two nodes; and generate the topology information of each of the plurality of pods based on the LLDP information of the at least two nodes.

In the foregoing apparatus, the first node needs to communicate with the at least two nodes, collect the LLDP information of the at least two nodes, and generate the topology information of each of the plurality of pods based on LLDP information collected in real time. The manner of generating the topology information is more accurate.

In another optional solution,
a weight of a pod in the first node is a first weight;
a weight of a pod in a second node is a second weight, where the second node and the first node are connected to a same top-of-rack switch, and an Internet Protocol IP address of the second node and an IP address of the first node belong to a same network segment;
a weight of a pod in a third node is a third weight, where the third node and the first node are connected to different top-of-rack switches, and the different top-of-rack switches are connected to a same leaf switch; and
a weight of a pod in a fourth node is a fourth weight, where the fourth node and the first node are connected to different leaf switches, and the different leaf switches are connected to a same spine switch.

In an implementation, first weight<second weight<third weight<fourth weight. In this implementation, a larger weight indicates higher calculated overheads and a smaller probability of selecting a pod related to the overheads.

In another implementation, first weight>second weight>third weight>fourth weight. In this implementation, a larger weight indicates lower calculated overheads and a larger probability of selecting a pod related to the overheads.

In another optional solution, the selection unit 703 is configured to: when all of the plurality of pods have same load, select a pod with a smallest weight from the plurality of pods as the target pod. Because a quantity of layers of switches between the pod with the smallest weight and the first node is the smallest, the target pod selected in this manner can reduce network overheads in the case of same load.

In another optional solution, the selection unit 703 is configured to: when the plurality of pods have different load, select the target pod from the plurality of pods based on load of each of the plurality of pods and the weight of each pod. The manner of selecting the target pod by comprehensively considering the value of the weight of each pod and the load of each pod can balance load balancing and network overhead reduction, to improve overall performance of the load balancing cluster.

In another optional solution, the apparatus further includes a directing unit, and the directing unit is configured to: after the selection unit 703 selects the target pod from the plurality of pods based on the weight of each pod, direct the currently to-be-processed task in the first node to the target pod, to indicate the target pod to process the currently to-be-processed task.

It should be noted that for implementation of the units, refer to corresponding descriptions in the method embodiment shown in FIG. 3.

FIG. 8 shows another load balancing apparatus 800 according to an embodiment of this application. The load balancing apparatus may be the first node in the foregoing implementations or a virtual machine in the first node. The load balancing apparatus 800 includes a processor 801, a memory 802, and a communications interface 803. The processor 801 includes a control plane 805 and a data plane 806. The processor 801, the memory 802, and the communications interface 803 are connected to each other by using a bus 804.

The memory 802 includes but is not limited to a random access memory (RAM), a read-only memory (ROM), an erasable programmable read-only memory (EPROM), or a compact disc read-only memory (CD-ROM). The memory 802 is configured to store program instructions and data. The communications interface 803 is configured to send and receive data.

The processor 801 may be one or more central processing units (CPU). When the processor 801 is one CPU, the CPU may be a single-core CPU or a multi-core CPU.

The processor 801 in the load balancing apparatus 800 invokes the computer program stored in the memory 802 to perform the following operations:
determining, by using the control plane 805, topology information of each of a plurality of smallest management units pods in a load balancing cluster to which the first node belongs, where the plurality of pods are distributed on at least two nodes;
determining, by using the control plane 805, a weight of each of the plurality of pods based on the topology information of each pod; and
selecting, by using the data plane 806, a target pod from the plurality of pods based on the weight of each pod, where the target pod is configured to process a currently to-be-processed task in the first node.

In the foregoing load balancing apparatus, the weight of each pod is determined based on the topology information of each pod, so that a location relationship of each pod is quantized. Therefore, a value of the weight can reflect a quantity of layers of switches between a node in which each pod is located and the first node. Then a target pod spaced from the first node by a small quantity of layers of switches may be selected based on a value of the weight of each pod, to process the currently to-be-processed task in the first node, so that a pod spaced from the first node by a large quantity of layers of switches is prevented from being selected to process the currently to-be-processed task in the first node, thereby reducing network overheads.

In an optional solution, the load balancing cluster includes a control node and at least two computing nodes, the first node is one of the at least two computing nodes, the control node is configured to manage the at least two computing nodes, and the plurality of pods are distributed on the at least two computing nodes.

In another optional solution, the processor 801 is configured to:
receive, by using the communications interface 803, the topology information of each of the plurality of pods that is sent by the control node.

In this way, the load balancing apparatus directly receives the topology information of each of the plurality of pods that is sent by the control node, without collecting LLDP information of another computing node. This is quicker and reduces time for selecting the target pod.

In another optional solution, the processor 801 is configured to:
collect Link Layer Discovery Protocol LLDP information of the at least two nodes; and
generate the topology information of each of the plurality of pods based on the LLDP information of the at least two nodes.

In this way, the load balancing apparatus needs to communicate with the at least two nodes, collect the LLDP information of the at least two nodes, and generate the topology information of each of the plurality of pods based on LLDP information collected in real time. The manner of generating the topology information is more accurate.

Optionally, a weight of a pod in the first node is a first weight; a weight of a pod in a second node is a second weight, where the second node and the first node are connected to a same top-of-rack switch, and an Internet Protocol IP address of the second node and an IP address of the first node belong to a same network segment; a weight of a pod in a third node is a third weight, where the third node and the first node are connected to different top-of-rack switches, and the different top-of-rack switches are connected to a same leaf switch; and a weight of a pod in a fourth node is a fourth weight, where the fourth node and the first node are connected to different leaf switches, and the different leaf switches are connected to a same spine switch.

In an implementation, first weight<second weight<third weight<fourth weight. In this implementation, a larger weight indicates higher calculated overheads and a smaller probability of selecting a pod related to the overheads.

In another implementation, first weight>second weight>third weight>fourth weight. In this implementation, a larger weight indicates lower calculated overheads and a larger probability of selecting a pod related to the overheads.

In another optional solution, when selecting the target pod from the plurality of pods based on the weight of each pod, the processor 801 is configured to:
when all of the plurality of pods have same load, select a pod with a smallest weight from the plurality of pods as the target pod, where because a quantity of layers of switches between the pod with the smallest weight and the first node is the smallest, the target pod selected in this manner can reduce network overheads in the case of same load; or
when the plurality of pods have different load, select the target pod from the plurality of pods based on load of each of the plurality of pods and the weight of each pod, where the manner of selecting the target pod by comprehensively considering the value of the weight of each pod and the load of each pod can balance load balancing and network overhead reduction, to improve overall performance of the load balancing cluster.

In another optional solution, the processor 801 is further configured to:
after selecting the target pod from the plurality of pods based on the weight of each pod, direct the currently to-be-processed task in the first node to the target pod, to indicate the target pod to process the currently to-be-processed task.

It should be noted that for implementation of each operation, refer to corresponding descriptions in the method embodiment shown in FIG. 3.

Another object of the invention is a computer-readable storage medium. The computer-readable storage medium stores a computer program, and when the computer program runs on a processor, the method shown in FIG. 3 is implemented.

Another implementation is a computer program product. When the computer program product is run on a processor, the method shown in FIG. 3 is implemented

A person of ordinary skill in the art may understand that all or some of the procedures of the methods in the embodiments may be implemented by a computer program or a computer program driving related hardware. The computer program may be stored in a computer-readable storage medium, and when the program is executed, the procedures of the foregoing method embodiments may be implemented. The foregoing storage medium includes any medium that can store computer program code, such as a ROM, a random access memory RAM, a magnetic disk, or an optical disk.

## Claims

1. A load balancing method for allocating a to-be-processed task in a load balancing cluster, comprising:
determining (S301) topology information of each of a plurality of pods in the load balancing cluster comprising at least two nodes which include a first node, wherein a pod is a smallest management unit in the cluster and the plurality of pods are distributed on at the least two nodes;
determining (S302) a weight of each of the plurality of pods based on the topology information of each pod, wherein the weight of a pod reflects a topological location relationship of the pod with respect to the first node , a value of the weight reflecting a quantity of layers of switches between a node in which each pod is located and the first node; and
selecting (303) a target pod from the plurality of pods based on the weight of each pod, wherein the target pod is configured to process the currently to-be-processed task in the first node.

2. The method according to claim 1, wherein the load balancing cluster comprises a control node (101) and at least two computing nodes (102), the first node is one of the at least two computing nodes, the control node is configured to manage the at least two computing nodes, and the plurality of pods are distributed on the at least two computing nodes.

3. The method according to claim 2, wherein the determining topology information of each of a plurality of smallest management units pods in a load balancing cluster to which a first node belongs comprises:
receiving the topology information of each of the plurality of pods that is sent by the control node.

4. The method according to claim 1 or 2, wherein the determining topology information of each of a plurality of smallest management units pods in a load balancing cluster to which a first node belongs comprises:
collecting Link Layer Discovery Protocol, LLDP, information of the at least two nodes; and
generating the topology information of each of the plurality of pods based on the LLDP information of the at least two nodes.

5. The method according to any one of claims 1 to 4, wherein
a weight of a pod in the first node is a first weight;
a weight of a pod in a second node is a second weight, wherein the second node and the first node are connected to a same top-of-rack switch, and an Internet Protocol, IP, address of the second node and an IP address of the first node belong to a same network segment;
a weight of a pod in a third node is a third weight, wherein the third node and the first node are connected to different top-of-rack switches, and the different top-of-rack switches are connected to a same leaf switch; and
a weight of a pod in a fourth node is a fourth weight, wherein the fourth node and the first node are connected to different leaf switches, and the different leaf switches are connected to a same spine switch.

6. The method according to any one of claims 1 to 5, wherein the selecting a target pod from the plurality of pods based on the weight of each pod comprises:
when all of the plurality of pods have same load, selecting a pod with a smallest weight from the plurality of pods as the target pod; or
when the plurality of pods have different load, selecting the target pod from the plurality of pods based on load of each of the plurality of pods and the weight of each pod.

7. The method according to any one of claims 1 to 6, after the selecting a target pod from the plurality of pods based on the weight of each pod, further comprising:
directing the currently to-be-processed task in the first node to the target pod, to indicate the target pod to process the currently to-be-processed task.

8. A load balancing apparatus (700) for allocating a to-be-processed task in a load balancing cluster, comprising:
a first determining unit (701), configured to determine topology information of each of a plurality of pods in the load balancing cluster comprising at least two nodes which include
a first node, wherein a pod is a smallest management unit in the cluster and the plurality of pods are distributed on the at least two nodes;
a second determining unit (702), configured to determine a weight of each of the plurality of pods based on the topology information of each pod, wherein the weight of a pod reflects a topological location relationship of the pod with respect to the first node , a value of the weight reflecting a quantity of layers of switches between a node in which each pod is located and the first node; and
a selection unit (703), configured to select a target pod from the plurality of pods based on the weight of each pod, wherein the target pod is configured to process the currently to-be-processed task in the first node.

9. The apparatus according to claim 8, wherein the load balancing cluster comprises a control node (101) and at least two computing nodes (102), the first node is one of the at least two computing nodes, the control node is configured to manage the at least two computing nodes, and the plurality of pods are distributed on the at least two computing nodes.

10. The apparatus according to claim 9, wherein the first determining unit is configured to receive the topology information of each of the plurality of pods that is sent by the control node.

11. The apparatus according to claim 8 or 9, wherein the first determining unit is configured to: collect Link Layer Discovery Protocol, LLDP, information of the at least two nodes; and generate the topology information of each of the plurality of pods based on the LLDP information of the at least two nodes.

12. The apparatus according to any one of claims 8 to 11, wherein
a weight of a pod in the first node is a first weight;
a weight of a pod in a second node is a second weight, wherein the second node and the first node are connected to a same top-of-rack switch, and an Internet Protocol, IP, address of the second node and an IP address of the first node belong to a same network segment;
a weight of a pod in a third node is a third weight, wherein the third node and the first node are connected to different top-of-rack switches, and the different top-of-rack switches are connected to a same leaf switch; and
a weight of a pod in a fourth node is a fourth weight, wherein the fourth node and the first node are connected to different leaf switches, and the different leaf switches are connected to a same spine switch.

13. The apparatus according to any one of claims 8 to 12, wherein
the selection unit is configured to: when all of the plurality of pods have same load, select a pod with a smallest weight from the plurality of pods as the target pod; or
the selection unit is configured to: when the plurality of pods have different load, select the target pod from the plurality of pods based on load of each of the plurality of pods and the weight of each pod.

14. The apparatus according to any one of claims 8 to 13, wherein the apparatus further comprises:
a directing unit, configured to: after the selection unit selects the target pod from the plurality of pods based on the weight of each pod, direct the currently to-be-processed task in the first node to the target pod, to indicate the target pod to process the currently to-be-processed task.

15. A computer-readable storage medium, wherein the computer-readable storage medium stores a computer program, and when the computer program is executed by a processor, the processor is enabled to perform the method according to any one of claims 1 to 7.

## Patentansprüche

1. Lastausgleichsverfahren zum Zuweisen einer zu verarbeitenden Aufgabe in einem Lastausgleichscluster, umfassend:
Bestimmen (S301) von Topologieinformationen jedes einer Vielzahl von Pods in dem Lastausgleichscluster, umfassend mindestens zwei Knoten, die einen ersten Knoten beinhalten, wobei ein Pod eine kleinste Verwaltungseinheit in dem Cluster ist und die Vielzahl von Pods auf die mindestens zwei Knoten verteilt ist;
Bestimmen (S302) eines Gewichts jedes der Vielzahl von Pods basierend auf den Topologieinformationen jedes Pods, wobei das Gewicht eines Pods eine topologische Standortbeziehung des Pods in Bezug auf den ersten Knoten widerspiegelt, wobei ein Wert des Gewichts eine Anzahl von Switch-Schichten zwischen einem Knoten, in dem jeder Pod positioniert ist, und dem ersten Knoten widerspiegelt; und
Auswählen (303) eines Ziel-Pods aus der Vielzahl von Pods basierend auf dem Gewicht jedes Pods, wobei der Ziel-Pod dazu konfiguriert ist, die aktuell zu verarbeitende Aufgabe in dem ersten Knoten zu verarbeiten.

2. Verfahren gemäß Anspruch 1, wobei der Lastausgleichscluster einen Steuerungsknoten (101) und mindestens zwei Rechenknoten (102) umfasst, der erste Knoten einer der mindestens zwei Rechenknoten ist, der Steuerungsknoten dazu konfiguriert ist, die mindestens zwei Rechenknoten zu verwalten, und die Vielzahl von Pods auf die mindestens zwei Rechenknoten verteilt ist.

3. Verfahren gemäß Anspruch 2, wobei das Bestimmen von Topologieinformationen jedes einer Vielzahl von kleinsten Verwaltungseinheiten-Pods in einem Lastausgleichscluster, zu dem ein erster Knoten gehört, Folgendes umfasst:
Empfangen der Topologieinformationen jedes der Vielzahl von Pods, die von dem Steuerungsknoten gesendet werden.

4. Verfahren gemäß Anspruch 1 oder 2, wobei das Bestimmen von Topologieinformationen jedes einer Vielzahl von kleinsten Verwaltungseinheiten-Pods in einem Lastausgleichscluster, zu dem ein erster Knoten gehört, Folgendes umfasst:
Sammeln von Informationen des Verbindungsschichterkennungsprotokolls (Link Layer Discovery Protocol - LLDP) der mindestens zwei Knoten; und
Generieren der Topologieinformationen für jeden der Vielzahl von Pods basierend auf den LLDP-Informationen der mindestens zwei Knoten.

5. Verfahren gemäß einem der Ansprüche 1 bis 4, wobei
ein Gewicht eines Pods in dem ersten Knoten ein erstes Gewicht ist;
ein Gewicht eines Pods in einem zweiten Knoten ein zweites Gewicht ist, wobei der zweite Knoten und der erste Knoten mit einem selben Top-of-Rack-Switch verbunden sind und eine Internetprotokoll-Adresse (Internet Protocol - IP) des zweiten Knotens und eine IP-Adresse des ersten Knotens zu einem selben Netzwerksegment gehören;
ein Gewicht eines Pods in einem dritten Knoten ein drittes Gewicht ist, wobei der dritte Knoten und der erste Knoten mit unterschiedlichen Top-of-Rack-Switches verbunden sind, und die unterschiedlichen Top-of-Rack-Switches mit demselben Leaf-Switch verbunden sind; und
ein Gewicht eines Pods in einem vierten Knoten ein viertes Gewicht ist, wobei der vierte Knoten und der erste Knoten mit unterschiedlichen Leaf-Switches verbunden sind und die unterschiedlichen Leaf-Switches mit einem gleichen Spine-Switch verbunden sind.

6. Verfahren gemäß einem der Ansprüche 1 bis 5, wobei das Auswählen eines Ziel-Pods aus der Vielzahl von Pods basierend auf dem Gewicht jedes Pods Folgendes umfasst:
wenn alle aus der Vielzahl von Pods die gleiche Last aufweisen, Auswählen eines Pods mit einem kleinsten Gewicht aus der Vielzahl von Pods als den Ziel-Pod; oder
wenn die Vielzahl von Pods eine unterschiedliche Last aufweisen, Auswählen des Ziel-Pods aus der Vielzahl von Pods basierend auf der Last jedes der Vielzahl von Pods und dem Gewicht jedes Pods.

7. Verfahren gemäß einem der Ansprüche 1 bis 6, nach dem Auswählen eines Ziel-Pods aus der Vielzahl von Pods basierend auf dem Gewicht jedes Pods, ferner umfassend:
Leiten der aktuell zu verarbeitenden Aufgabe in dem ersten Knoten zu dem Ziel-Pod, um dem Ziel-Pod anzuzeigen, die aktuell zu verarbeitende Aufgabe zu verarbeiten.

8. Lastausgleichsvorrichtung (700) zum Zuweisen einer zu verarbeitenden Aufgabe in einem Lastausgleichscluster, umfassend:
eine erste Bestimmungseinheit (701), die dazu konfiguriert ist, Topologieinformationen jedes einer Vielzahl von Pods in dem Lastausgleichscluster zu bestimmen, umfassend mindestens zwei Knoten, die einen ersten Knoten beinhalten, wobei ein Pod eine kleinste Verwaltungseinheit in dem Cluster ist und die Vielzahl von Pods auf die mindestens zwei Knoten verteilt ist;
eine zweite Bestimmungseinheit (702), die dazu konfiguriert ist, ein Gewicht jedes der Vielzahl von Pods basierend auf den Topologieinformationen jedes Pods zu bestimmen, wobei das Gewicht eines Pods eine topologische Standortbeziehung des Pods in Bezug auf den ersten Knoten widerspiegelt, wobei ein Wert des Gewichts eine Anzahl von Switch-Schichten zwischen einem Knoten, in dem jeder Pod positioniert ist, und dem ersten Knoten widerspiegelt;
und
eine Auswahleinheit (703), die dazu konfiguriert ist, einen Ziel-Pod aus der Vielzahl von Pods basierend auf dem Gewicht jedes Pods auszuwählen, wobei der Ziel-Pod dazu konfiguriert ist, die aktuell zu verarbeitende Aufgabe in dem ersten Knoten zu verarbeiten.

9. Vorrichtung gemäß Anspruch 8, wobei der Lastausgleichscluster einen Steuerungsknoten (101) und mindestens zwei Rechenknoten (102) umfasst, der erste Knoten einer der mindestens zwei Rechenknoten ist, der Steuerungsknoten dazu konfiguriert ist, die mindestens zwei Rechenknoten zu verwalten, und die Vielzahl von Pods auf die mindestens zwei Rechenknoten verteilt ist.

10. Vorrichtung gemäß Anspruch 9, wobei die erste Bestimmungseinheit dazu konfiguriert ist, die Topologieinformationen jedes der Vielzahl von Pods zu empfangen, die von dem Steuerungsknoten gesendet werden.

11. Vorrichtung gemäß Anspruch 8 oder 9, wobei die erste Bestimmungseinheit dazu konfiguriert ist: Sammeln von LLDP-Informationen des Verbindungsschichterkennungsprotokolls der mindestens zwei Knoten; und Generieren der Topologieinformationen für jeden der Vielzahl von Pods basierend auf den LLDP-Informationen der mindestens zwei Knoten.

12. Vorrichtung gemäß einem der Ansprüche 8 bis 11, wobei
ein Gewicht eines Pods in dem ersten Knoten ein erstes Gewicht ist;
ein Gewicht eines Pods in einem zweiten Knoten ein zweites Gewicht ist, wobei der zweite Knoten und der erste Knoten mit einem selben Top-of-Rack-Switch verbunden sind und eine Internetprotokoll-, IP-, Adresse des zweiten Knotens und eine IP-Adresse des ersten Knotens zu einem selben Netzwerksegment gehören;
ein Gewicht eines Pods in einem dritten Knoten ein drittes Gewicht ist, wobei der dritte Knoten und der erste Knoten mit unterschiedlichen Top-of-Rack-Switches verbunden sind, und die unterschiedlichen Top-of-Rack-Switches mit demselben Leaf-Switch verbunden sind; und
ein Gewicht eines Pods in einem vierten Knoten ein viertes Gewicht ist, wobei der vierte Knoten und der erste Knoten mit unterschiedlichen Leaf-Switches verbunden sind und die unterschiedlichen Leaf-Switches mit einem gleichen Spine-Switch verbunden sind.

13. Vorrichtung gemäß einem der Ansprüche 8 bis 12, wobei
die Auswahleinheit dazu konfiguriert ist: wenn alle aus der Vielzahl von Pods die gleiche Last aufweisen, Auswählen eines Pods mit einem kleinsten Gewicht aus der Vielzahl von Pods als den Ziel-Pod; oder
die Auswahleinheit dazu konfiguriert ist: wenn die Vielzahl von Pods eine unterschiedliche Last aufweisen, Auswählen des Ziel-Pods aus der Vielzahl von Pods basierend auf der Last jedes der Vielzahl von Pods und dem Gewicht jedes Pods.

14. Vorrichtung gemäß einem der Ansprüche 8 bis 13, wobei die Vorrichtung ferner Folgendes umfasst:
eine Anweisungseinheit, die dazu konfiguriert ist: nachdem die Auswahleinheit den Ziel-Pod aus der Vielzahl von Pods basierend auf dem Gewicht jedes Pods auswählt, Leiten der aktuell zu verarbeitenden Aufgabe in dem ersten Knoten an den Ziel-Pod, um dem Ziel-Pod anzuzeigen, die aktuell zu verarbeitende Aufgabe zu verarbeiten.

15. Computerlesbares Speichermedium, wobei das computerlesbare Speichermedium ein Computerprogramm speichert, und wenn das Computerprogramm durch einen Prozessor ausgeführt wird, der Prozessor in die Lage versetzt wird, das Verfahren gemäß einem der Ansprüche 1 bis 7 durchzuführen.

## Revendications

1. Procédé d'équilibrage de charge pour allouer une tâche à traiter dans un cluster d'équilibrage de charge, comprenant :
la détermination (S301) d'informations de topologie de chacun d'une pluralité de pods dans le cluster d'équilibrage de charge comprenant au moins deux noeuds qui comportent un premier noeud, dans lequel un pod est la plus petite unité de gestion dans le cluster et la pluralité de pods sont répartis sur les au moins deux noeuds ;
la détermination (S302) d'un poids de chacun de la pluralité de pods sur la base des informations de topologie de chaque pod, dans lequel le poids d'un pod reflète une relation d'emplacement topologique du pod par rapport au premier noeud, une valeur du poids reflétant une quantité de couches de commutateurs entre un noeud dans lequel se trouve chaque pod et le premier noeud ; et
la sélection (303) d'un pod cible parmi la pluralité de pods sur la base du poids de chaque pod, dans lequel le pod cible est configuré pour traiter la tâche actuellement à traiter dans le premier noeud.

2. Procédé selon la revendication 1, dans lequel le cluster d'équilibrage de charge comprend un noeud de commande (101) et au moins deux noeuds de calcul (102), le premier noeud est l'un des au moins deux noeuds de calcul, le noeud de commande est configuré pour gérer les au moins deux noeuds de calcul, et la pluralité de pods est distribuée sur les au moins deux noeuds de calcul.

3. Procédé selon la revendication 2, dans lequel la détermination des informations de topologie de chacun d'une pluralité de plus petits pods d'unités de gestion dans un cluster d'équilibrage de charge auquel appartient un premier noeud comprend :
la réception des informations de topologie de chacun de la pluralité de pods qui sont envoyées par le noeud de commande.

4. Procédé selon la revendication 1 ou 2, dans lequel la détermination des informations de topologie de chacun d'une pluralité de plus petits pods d'unités de gestion dans un cluster d'équilibrage de charge auquel appartient un premier noeud comprend :
la collecte d'informations de protocole de découverte de couche de liaison, LLDP, des au moins deux noeuds ; et
la génération des informations de topologie de chacun de la pluralité de pods sur la base des informations LLDP des au moins deux noeuds.

5. Procédé selon l'une quelconque des revendications 1 à 4, dans lequel
un poids d'un pod dans le premier noeud est un premier poids ; un poids d'un pod dans un deuxième noeud est un deuxième poids, dans lequel le deuxième noeud et le premier noeud sont connectés à un même commutateur haut de baie, et une adresse de Protocole Internet, IP du deuxième noeud et une adresse IP du premier noeud appartiennent à un même segment de réseau ;
un poids d'un pod dans un troisième noeud est un troisième poids, dans lequel le troisième noeud et le premier noeud sont connectés à des commutateurs haut de baie différents, et les commutateurs haut de baie différents sont connectés à un même commutateur feuille ; et
un poids d'un pod dans un quatrième noeud est un quatrième poids, dans lequel le quatrième noeud et le premier noeud sont connectés à des commutateurs feuilles différents, et les commutateurs feuilles différents sont connectés à un même commutateur dorsal.

6. Procédé selon l'une quelconque des revendications 1 à 5, dans lequel la sélection d'un pod cible parmi la pluralité de pods sur la base du poids de chaque pod comprend :
lorsque la totalité de la pluralité de pods a la même charge, la sélection d'un pod ayant le plus petit poids parmi la pluralité de pods en tant que pod cible ; ou
lorsque la pluralité de pods ont une charge différente, la sélection du pod cible parmi la pluralité de pods sur la base de la charge de chacune de la pluralité de pods et du poids de chaque pod.

7. Procédé selon l'une quelconque des revendications 1 à 6, après la sélection d'un pod cible parmi la pluralité de pods sur la base du poids de chaque pod, comprenant également :
l'orientation de la tâche à traiter actuellement dans le premier noeud vers le pod cible, pour indiquer au pod cible de traiter la tâche à traiter actuellement.

8. Appareil d'équilibrage de charge (700) pour allouer une tâche à traiter dans un cluster d'équilibrage de charge, comprenant :
une première unité de détermination (701), configurée pour déterminer des informations de topologie de chacun d'une pluralité de pods dans le cluster d'équilibrage de charge comprenant au moins deux noeuds qui comportent un premier noeud, dans lequel un pod est la plus petite unité de gestion dans le cluster et la pluralité de pods sont répartis sur les au moins deux noeuds ;
une seconde unité de détermination (702) configurée pour déterminer un poids de chacun de la pluralité de pods sur la base des informations de topologie de chaque pod, dans lequel le poids d'un pod reflète une relation d'emplacement topologique du pod par rapport au premier noeud, une valeur du poids reflétant une quantité de couches de commutateurs entre un noeud dans lequel se trouve chaque pod et le premier noeud ;
et
une unité de sélection (703), configurée pour sélectionner un pod cible parmi la pluralité de pods sur la base du poids de chaque pod, dans lequel le pod cible est configuré pour traiter la tâche à traiter actuellement dans le premier noeud.

9. Appareil selon la revendication 8, dans lequel le cluster d'équilibrage de charge comprend un noeud de commande (101) et au moins deux noeuds de calcul (102), le premier noeud est l'un des au moins deux noeuds de calcul, le noeud de commande est configuré pour gérer les au moins deux noeuds de calcul, et la pluralité de pods sont distribués sur les au moins deux noeuds de calcul.

10. Appareil selon la revendication 9, dans lequel la première unité de détermination est configurée pour recevoir les informations de topologie de chacun de la pluralité de pods qui sont envoyées par le noeud de commande.

11. Appareil selon la revendication 8 ou 9, dans lequel la première unité de détermination est configurée pour : collecter des informations de protocole de découverte de couche de liaison, LLDP, des au moins deux noeuds ; et générer les informations de topologie de chacun de la pluralité de pods sur la base des informations LLDP des au moins deux noeuds.

12. Appareil selon l'une quelconque des revendications 8 à 11, dans lequel
un poids d'un pod dans le premier noeud est un premier poids ;
un poids d'un pod dans un deuxième noeud est un deuxième poids, dans lequel le deuxième noeud et le premier noeud sont connectés à un même commutateur haut de baie, et une adresse de Protocole Internet, IP du deuxième noeud et une adresse IP du premier noeud appartiennent à un même segment de réseau ;
un poids d'un pod dans un troisième noeud est un troisième poids,
dans lequel le troisième noeud et le premier noeud sont connectés à des commutateurs haut de baie différents, et les commutateurs haut de baie différents sont connectés à un même commutateur feuille ; et
un poids d'un pod dans un quatrième noeud est un quatrième poids, dans lequel le quatrième noeud et le premier noeud sont connectés à des commutateurs feuilles différents, et les commutateurs feuilles différents sont connectés à un même commutateur dorsal.

13. Appareil selon l'une quelconque des revendications 8 à 12, dans lequel
l'unité de sélection est configurée pour : lorsque la totalité de la pluralité de pods a la même charge, sélectionner un pod ayant le plus petit poids parmi la pluralité de pods en tant que pod cible ; ou
l'unité de sélection est configurée pour : lorsque la pluralité de pods ont une charge différente, sélectionner le pod cible parmi la pluralité de pods sur la base de la charge de chacune de la pluralité de pods et du poids de chaque pod.

14. Appareil selon l'une quelconque des revendications 8 à 13, dans lequel l'appareil comprend également :
une unité de direction, configurée pour : après que l'unité de sélection a sélectionné le pod cible parmi la pluralité de pods sur la base du poids de chaque pod, orienter la tâche à traiter actuellement dans le premier noeud vers le pod cible, pour indiquer au pod cible de traiter la tâche à traiter actuellement.

15. Support de stockage lisible par ordinateur, dans lequel le support de stockage lisible par ordinateur stocke un programme informatique, et lorsque le programme informatique est exécuté sur un processeur, le processeur est capable de mettre en œuvre le procédé selon l'une quelconque des revendications 1 à 7.
